# DEMANDE DE BREVET EUROPEEN

(11) **EP 4 213 323 A1**
(43) Date de publication de la demande: **19.07.2023**
(21) Numéro de dépôt: 23151031.4
(22) Date de dépôt: 10.01.2023
(51) Int. Cl.: H02G 3/04, E02D 27/42, H02B 1/30

(54) **SUPPORT EN BÉTON COMPRENANT UNE ALVÉOLE D ENCASTREMENT D'UNE PORTION PÉRIPHÉRIQUE D'UN SOCLE DE COFFRET, MOULE DE FABRICATION ET PROCÉDÉ DE FABRICATION ASSOCIÉS**

(30) Priorité: 17.01.2022 FR 2200344
(71) Demandeur: Faaite, Huritaua, 98704 Faa'a Centre (FR); Goujon, Ioane, 98704 FAA'A Centre (FR)
(72) Inventeur: Faaite, Huritaua, 98704 Faa'a Centre (FR); Goujon, Ioane, 98704 FAA'A Centre (FR)
(74) Mandataire: Vidon Brevets & Stratégie

(57) **Abrégé**

L'invention concerne un support en béton (1) pour socle (2) de coffret (3) hors sol de raccordement à un réseau, notamment d'énergie ou de communication, comprenant une semelle (10) en béton. Selon l'invention, ladite semelle (10) présente un logement (12) formant alvéole d'encastrement d'une portion périphérique (210) d'une enveloppe (20) dudit socle (2).

## Description

### 1. Domaine de l'invention

Le domaine de l'invention est celui des dispositifs connexes aux équipements de distribution d'énergie électrique.

Plus précisément, l'invention se rapporte aux supports en béton destinés à l'installation, c'est-à-dire à la fixation et au maintien en position, de socles de coffrets hors sol de raccordement à des réseaux, d'énergie ou de communication de préférence.

Plus précisément encore, l'invention se rapporte à de tels supports en béton destinés à l'installation de socles de coffrets destinés aux particuliers.

### 2. Art antérieur

Parmi les nombreux dispositifs et systèmes de distribution d'énergie électrique connus, il existe notamment les coffrets hors sol de raccordement à des réseaux électriques basses tensions, c'est-à-dire 230 ou 400V, destinés aux particuliers.

Les coffrets hors sol constituent des produits d'émergence de réseaux souterrains installés en extérieur sur le domaine public ou en limite de propriété privée d'un particulier.

De tels coffrets permettent de protéger, tout en autorisant l'accès aux personnes autorisées, l'installation électrique située en chacun d'eux. Une telle installation électrique comprend traditionnellement une portion des conduites électriques publiques et privés, une structure de raccordement de celles-ci et un dispositif de comptage électrique, typiquement un compteur électrique, mesurant la quantité d'énergie électrique consommée par le particulier (une habitation, des bureaux professionnels, etc.).

Il est également connu que de tels coffrets sont généralement montés, par des moyens de fixation appropriés, sur des socles de retenue partiellement enfouis dans le sol. Lorsque que posé, un tel socle permet notamment le passage des conduites électriques publiques et privés, préalablement disposées dans une tranchée ménagée dans le sol, vers le coffret surplombant le socle.

Pour ce faire, le socle est habituellement formé par une enveloppe définissant, d'une part, les parois extérieures du socle et, d'autre part, un volume intérieur vide. Cette enveloppe présente en outre, sur deux faces horizontales opposées, des ouvertures débouchant dans le volume intérieur vide de sorte à permettre le passage des conduites électriques publiques et privés. Ainsi, lorsqu'assemblés, le socle et le coffret font saillie du sol.

L'installation, ou la pose, du socle se fait traditionnellement par l'intermédiaire d'un support en béton permettant d'assurer la fixation et le maintien en position du socle dans le sol.

Une première technique connue consiste à fixer sous l'enveloppe du socle quatre tubes, un à proximité de chaque angle, s'étendant verticalement. Ces tubes, réalisés en un matériau plastique, sont ensuite glissés à l'intérieur d'orifices prévus dans un bloc en béton, plein et préfabriqué, préalablement enfoui dans le sol à environ 80 cm de profondeur. La longueur des tubes est déterminée de manière à assurer un écartement prédéterminé entre le socle et le bloc en béton pour, d'une part, permettre le passage des conduites électriques publiques et privés et, d'autre part, mettre la base du socle sensiblement à niveau du sol.

Une deuxième solution connue, consiste en un support en béton préfabriqué intégrant quatre tubes, réalisés en un matériau plastique, configurés pour coopérer avec des moyens de fixation prévus sous l'enveloppe du socle. En d'autres termes, les quatre tubes sont coulés dans le béton lors de la fabrication du support afin d'assurer un ensemble solidaire. La longueur de tubes étant relativement courte, approximativement 5 cm, un renfoncement, ou rainurage, vertical, destiné passage des conduites électriques publiques et privés, est ménagé sur un coté du support. Un tel support en béton pèse approximativement 50 kg afin d'assurer la stabilité du socle devant être porté par celui-ci.

Ces solutions, impliquant respectivement que le socle repose sur le support ou bloc en béton par l'intermédiaire de tubes, présentent cependant différents inconvénients.

La première solution connue nécessite de creuser dans le sol un trou d'approximativement 80 cm de profondeur et ce, sur une surface prédéterminée fonction du type de socle utilisé. Le bloc en béton préfabriqué est ensuite disposé dans le fond du trou puis les tubes solidarisés au socle sont glissés dans les orifices ménagés dans le bloc. Enfin, le trou est comblé par des afin de stabiliser l'installation. Cette solution exige en moyenne deux heures de travail. Ces deux heures comprennent, outre la pose du bloc, du socle et du coffret, l'acheminement passage des conduites électriques publiques et privés et le raccordement de celle-ci à l'intérieur du coffret de manière à rendre l'installation électrique opérationnelle. Il apparaît que cette solution est harassante et chronophage pour les intervenants la réalisant.

Par ailleurs, une telle solution ne permet pas de garantir l'intégrité et la pérennité du raccordement du socle sur le bloc en béton. Aucune solidarisation des tubes dans le bloc en béton n'est prévue, sauf à utiliser une solution extérieure non prévue initialement, et donc non optimale. En outre, les pierres utilisées pour combler le trou peuvent endommager les tubes. Cela peut notamment amoindrir la stabilité du socle et du coffret.

La deuxième solution connue consiste à creuser dans le sol un trou d'environ 60 cm de profondeur et de placer dans le fond du trou le support en béton préfabriqué. Le socle est ensuite fixé sur les tubes solidaires du support en béton. Toutefois, la masse importante d'un tel support en béton rend également l'installation du socle et coffret harassante et chronophage pour les intervenants la réalisant. Par ailleurs, bien que les tubes présentent une longueur plus faible avec cette solution, ils présentent les mêmes inconvénients que la première solution.

Il apparaît qu'il existe donc un besoin de fournir une nouvelle technique de support en béton permettant d'assurer rapidement l'installation d'un coffret associé à son socle.

Il existe également un besoin de fournir une technique assurant une installation efficace et pérenne d'un coffret associé à son socle.

Il existe également un besoin de fournir une technique simple de fabrication, légère et/ou peu encombrante.

### 3. Résumé de l'invention

La technique proposée se rapporte, selon un premier aspect, à un support en béton pour socle de coffret hors sol de raccordement à un réseau, notamment d'énergie ou de communication, comprenant une semelle en béton.

Selon l'invention, la semelle présente un logement formant alvéole d'encastrement d'une portion périphérique d'une enveloppe du socle.

Un tel support permet à l'enveloppe du socle de coopérer directement avec le support en béton, puisque partiellement logée/encastrée à l'intérieur de celui-ci. Cela permet, d'une part, de s'affranchir de la mise en oeuvre des tubes intermédiaires des solutions antérieures, et donc des inconvénients associés, et, d'autre part, d'assurer la stabilité du socle dont une portion du pourtour est en prise directe avec le support en béton.

En outre, un support en béton conforme à la technique proposée a pour vocation d'être enfoui à ras le sol, c'est-à-dire à une profondeur relativement faible, par exemple entre 16,4 à 20 cm de profondeur, contre 80 cm avec les solutions antérieures connues. Cela permet, d'une part, de réduire la complexité et la durée de l'installation du socle et de son coffret et, d'autre part, d'améliorer la protection de conduites et canalisations enfouies. En effet, un support en béton conforme à la technique proposée permet d'être disposé à distances des conduites des réseaux électriques (Basse Tension et Haute Tension) et de communication, qui sont traditionnellement enfouies à 60 cm de profondeur d'un sol normal, et des canalisations de gaz et d'eau, qui sont quant à elles enfouies entre 80 et 120 cm de profondeur. Ainsi, on minimise le risque d'endommager les conduites et canalisation lorsque le trou devant réceptionner un tel support est creusé.

Selon un mode de réalisation particulier, le support en béton comprend en outre des moyens de fixation ou de verrouillage destinés à coopérer avec des moyens de fixation ou de verrouillage complémentaires portés par l'enveloppe du socle.

La mise en oeuvre de moyens de fixation peut être nécessaire lorsque l'encastrement/emboîtage, c'est-à-dire une coopération directe, du socle dans le support en béton est insuffisante pour assurer, à lui seul, la solidarisation de l'ensemble. Une telle situation peut notamment se présenter lorsque des jeux mécaniques entre la portion périphérique de l'enveloppe du socle et l'alvéole ne permettent pas d'assurer un effort de friction suffisant l'assemblage. Néanmoins, lorsque c'est le cas, il peut être envisagé de mettre en oeuvre des moyens de verrouillage permettant d'assurer le maintien de l'assemblage du socle sur le support en béton.

Selon un autre mode de réalisation particulier, le support en béton comprend en outre une structure de renfort disposée à l'intérieur de la semelle.

Une telle structure permet d'accroître la résistance du support en béton et donc, par extension, d'accroître la résistance et la stabilité des socle et coffret rapportés sur celui-ci.

Selon un autre mode de réalisation particulier, la semelle est réalisée en un béton composé de :
- 40% de sable fin,
- 50% de sable grossier, et
- 10% de ciment.

Une telle composition du béton permet d'obtenir d'un support en béton résistant tout en présentant une masse relativement faible. Cela se traduit donc par une simplification de la manipulation et de l'installation de ce support en béton.

Selon un autre mode de réalisation particulier, le logement comprend une partie principale, traversant de part en part la semelle, et au moins une partie auxiliaire borgne.

Outre l'encastrement du socle dans le support en béton, une telle configuration du logement permet notamment d'assurer, par le biais de sa partie principale, l'acheminement de conduites électriques publiques et privés et d'assurer, par le biais de ses parties auxiliaires, la mise à niveau avec le socle. En effet, il est brièvement rappelé que de telles conduites électriques sont disposées dans une tranchée débouchant dans le fond du trou creusé dans le sol. Ainsi, la partie principale assure le passage des conduites électriques publiques de la tranchée jusque dans le socle et puis dans le coffret.

De préférence, le support en béton comprend deux parties auxiliaires, les parties auxiliaires sont situées de part et d'autre de la partie principale et sont alignées à une extrémité commune de celle-ci.

Un tel agencement permet d'améliorer la stabilité du socle du fait que les deux côtés de celui-ci reposent sur des plateformes de mise à niveau.

Selon un autre mode de réalisation particulier, le support en béton est destiné à supporter un socle de type S20 conforme à la norme HN 62-S-20.

Pour ce faire, la semelle est de forme parallélépipède rectangle et présente une longueur de 48 cm, une largeur de 30,5 cm et une hauteur de 16,5 cm, la partie principale est de forme parallélépipède rectangle et présente une longueur de 25 cm, une largeur de 21,5 cm et une hauteur de 16,5 cm, et chaque partie auxiliaire est de forme parallélépipède rectangle et présente une longueur de 5,5 cm, une largeur de 4 cm et une hauteur de 10,5 cm.

La technique proposée se rapporte, selon un deuxième aspect, à un moule pour la fabrication d'un support en béton conforme au premier aspect de l'invention. Un tel moule comprend :
- un cadre définissant un espace intérieur clôt délimitant des côtés latéraux de la semelle,
- un noyau, destiné être disposé à l'intérieur de l'espace intérieur clôt, de formation du logement, et
- des butées de positionnement du noyau à l'intérieur de l'espace intérieur clôt.

Un tel moule de fabrication est relativement simple de conception et nécessite peu d'éléments. Cela permet notamment au support en béton conforme à la technique proposée de pouvoir être fabriqué à proximité du lieu de pose par exemple.

La technique proposée se rapporte, selon un troisième aspect, à un procédé de fabrication d'un support en béton conforme au premier aspect de l'invention, par la mise en oeuvre d'un moule tel que décrit précédemment. Un tel procédé comprend les étapes suivantes :
- positionnement du cadre sur une surface horizontale plane,
- fixation desdites butées sur le cadre selon un agencement prédéterminé,
- insertion du noyau à l'intérieur de l'espace intérieur clôt et mise en butée contre les butées,
- coulage d'un béton présentant une composition prédéterminée entre le cadre et le noyau, et
- après séchage du béton, extraction du support en béton.

Ainsi, il apparaît qu'un support en béton conforme à la technique proposée est relativement simple de fabrication. Par exemple, la mise en oeuvre des butées permet d'assurer un positionnement simple et rapide du noyau à l'intérieur de l'espace intérieur clôt du cadre.

### 4. Liste des Figures

La technique proposée, ainsi que les différents avantages qu'elle présente, seront plus facilement compris, à la lumière de la description qui va suivre d'un mode de réalisation illustratif et non limitatif de celle-ci, et des dessins annexés parmi lesquels :
[Fig.1A], [Fig.1B], [Fig.1C] et [Fig.1D] : la figure 1A à 1D illustrent, selon différentes vues, un exemple de support en béton comprenant une alvéole d'encastrement conformément à la technique proposée ;
[Fig.2] : la figure 2 illustre, selon une vue en perspective surélevée, le support en béton de la figure 1 dont l'alvéole d'encastrement est en regard d'une portion périphérique de l'enveloppe d'un socle de coffret hors sol de raccordement à un réseau électrique basse tension ;
[Fig.3] : la figure 3 illustre, selon une vue en coupe longitudinale, le support en béton de la figure 1 dont l'alvéole d'encastrement loge la portion périphérique de l'enveloppe du socle représenté en figure 2 ;
[Fig.4A], [Fig.4B], [Fig.4C] et [Fig.4D] : les figures 4A à 4D illustrent, selon différentes vues, un exemple de moule de fabrication du support en béton de la figure 1 ; et
[Fig.5] : la figure 5 est un organigramme représentant les étapes principales d'un procédé de fabrication du support en béton de la figure 1 avec le moule de fabrication des figures 4A à 4D.

### 5. Description détaillée de l'invention

### 5.1. Principe général

Au prix d'une démarche innovante et d'adaptations non évidentes d'un support en béton pour socle de coffret électrique, les inventeurs de la présente technique ont déterminé que, contrairement aux *a priori* de l'homme du métier, il est possible de garantir une installation efficace et pérenne d'un socle, et *a fortiori* du coffret le surplombant, en s'affranchissant d'un support enfoui profondément dans le sol.

Le principe général de l'invention consiste donc en un support en béton pour socle de coffret hors sol de raccordement à un réseau dont le corps, ou semelle, comprend un logement formant alvéole d'encastrement d'une portion périphérique d'une enveloppe du socle.

Ainsi, le socle n'est pas posé sur le support, mais encastré dans celui-ci.

L'enveloppe du socle est assimilable aux parois/surfaces extérieures du socle, correspondant sensiblement à un boîtier définissant un volume intérieur vide.

Un support en béton conforme à la technique proposée a pour vocation d'être enfoui à une profondeur relativement faible, approximativement 20 cm contre 80 cm avec les solutions antérieures connues. Cela permet notamment de réduire la complexité et la durée de l'installation du socle et de son coffret.

Par ailleurs, la technique proposée permet à l'enveloppe du socle de coopérer directement avec le support en béton, puisque partiellement logée/encastrée à l'intérieur de celui-ci. Cela permet, d'une part, de s'affranchir de la mise en oeuvre des tubes intermédiaires des solutions antérieures, et donc des inconvénients associés, et, d'autre part, d'assurer la stabilité du socle dont une portion du pourtour est en prise directe avec le support en béton.

### 5.2. Description d'un mode de réalisation

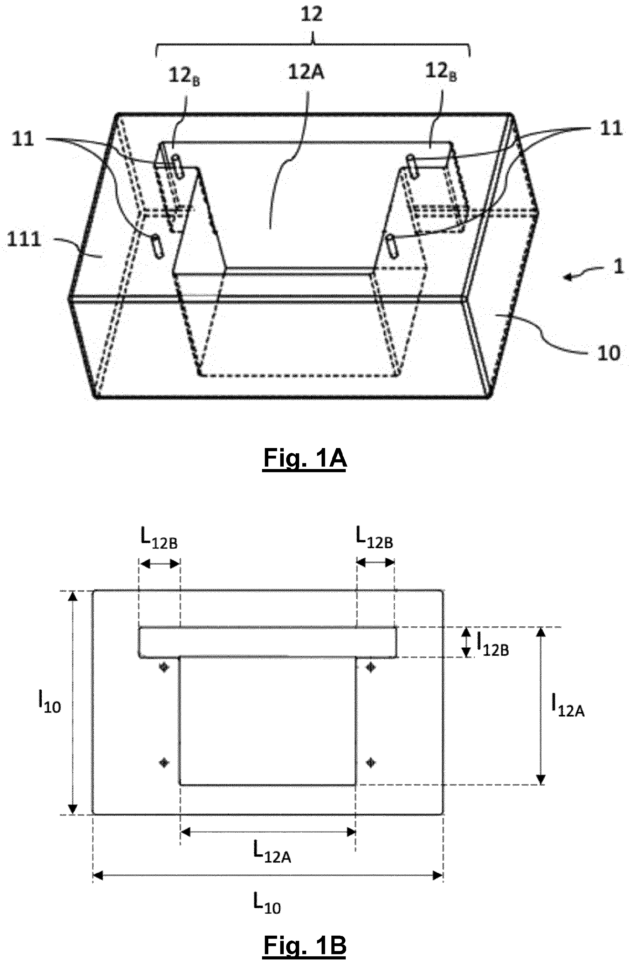

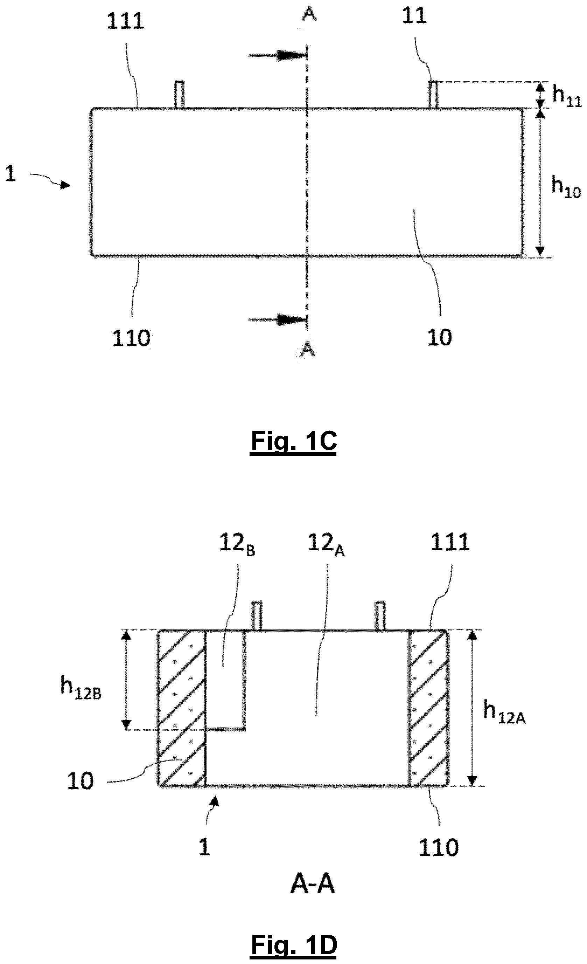

On illustre par la suite un mode de réalisation de la technique proposée, traité à titre de simple exemple illustratif, et non limitatif, à l'appui des figures 1 à 5 faisant directement ou indirectement référence à un socle de type S20, de norme HN 62-S-20, destiné à coopérer avec un coffret de type S20 également.

Néanmoins, comme il en ressortira clairement par la suite, la technique proposée n'est pas limitée aux socles de type S20 et peut, sous réserve d'adaptation des formes et/ou dimensions de certains aspects du support en béton, s'appliquer à d'autres structures et ou types de socles.

Par la suite, de mêmes éléments ont été désignés par de mêmes références sur les différentes figures.

### 5.2.1. Support en béton

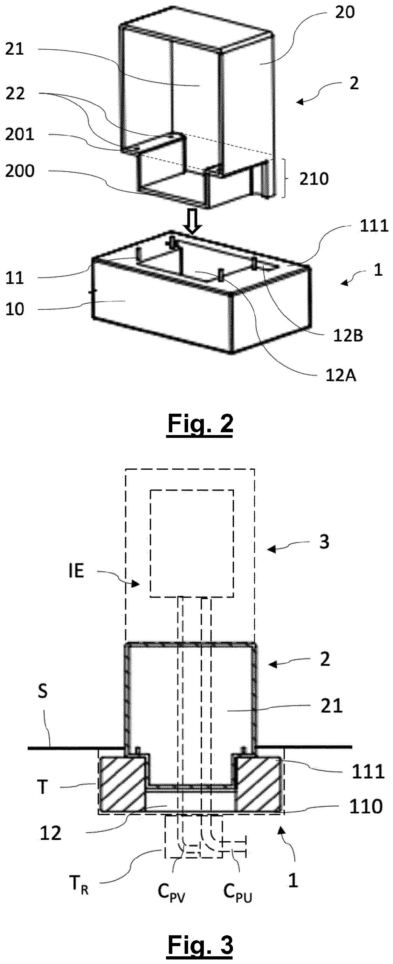

Les **figures 1A** à **1D** illustrent, selon différentes vues, un support en béton selon un mode de réalisation de la technique proposée. La **figure 2** illustre un tel support en béton en regard d'un socle destiné à être emboîté dans celui-ci. Les **figures 3** illustre, selon une vue en coupe longitudinale, un ensemble formé d'un support en béton conforme à la technique proposée et d'un socle surplombé d'un coffret logeant une installation électrique.

Un support en béton 1 se présente sous la forme d'un bloc, dont les formes et dimensions sont déterminées en fonction du type de socle devant y être logé, destiné être enfoui dans le sol pour assurer l'installation d'un socle 2 surplombé d'un coffret 3 hors sol de raccordement à un réseau.

Ce support en béton 1 est formé d'un corps 10, également appelé semelle, réalisé en un matériau béton.

Selon la technique proposée, le support en béton 1 présente un logement 12 formant alvéole d'encastrement d'une portion périphérique 210 d'une enveloppe 20 du socle 2.

Dans ce mode de réalisation, le logement est traversant et définit donc une lumière 12 sur une partie de sa section. En d'autres termes, le support en béton 1 présente une lumière 12 traversant deux côtés opposés du corps 10 et présentant des formes et dimensions complémentaires à celles d'une portion périphérique 210 du pourtour du socle 2. Le support en béton 1 présente ainsi une portion femelle d'emboîtement, à savoir la lumière 12, tandis que le socle 2 présente une portion mâle d'emboîtement, à savoir la portion périphérique 210. Le support en béton comprend ainsi un logement d'emboîtement de la portion périphérique de l'enveloppe du socle. Bien évidemment, les dimensions de la lumière 12 peuvent être légèrement supérieures à celles de la portion périphérique 210 afin d'obtenir un jeu simplifiant l'emboîtement du socle 2 dans le support en béton 1.

Une telle portion périphérique 210, virtuellement délimitée en pointillé sur la figure 2, se présente sensiblement sous la forme d'une bande fermée s'étendant sur une hauteur prédéterminée à partir de l'extrémité inférieure 200 de l'enveloppe 2.

Dans ce mode de réalisation, le support en béton 1 comprenant en outre des moyens de fixation 11 destinés à coopérer avec des moyens de fixation complémentaires (non représentés) portés par ou disposés dans une enveloppe 20 du socle 2 de sorte à assurer/contribuer à la fixation du socle 2 sur le support en béton 1.

Par ailleurs, la lumière 12 s'étend verticalement et comprend une partie principale 12A, traversant de part en part le corps 10, et deux parties auxiliaires 12B borgnes identiques.

Outre l'encastrement du socle 2 dans le support en béton 1, une telle configuration de la lumière 12 permet notamment d'assurer l'acheminement de conduites électriques publiques C_{PU} et privés C_{PR} par le biais de la partie principale 12A et d'assurer la mise à niveau avec le socle 2 par le biais des parties auxiliaires 12B, également appelées plateformes. En effet, tel qu'illustré en figure 3, les conduites électriques publiques C_{PU} et privés C_{PR} sont disposées dans une tranchée T_{R} débouchant dans le fond du trou T creusé dans le sol. La partie principale 12A de la lumière 12 permet donc le passage des conduites électriques publiques C_{PU} et privés C_{PR} de la tranchée T_{R} jusque dans le volume intérieur vide 21 du socle 2 et *in fine* jusque dans le coffret 3.

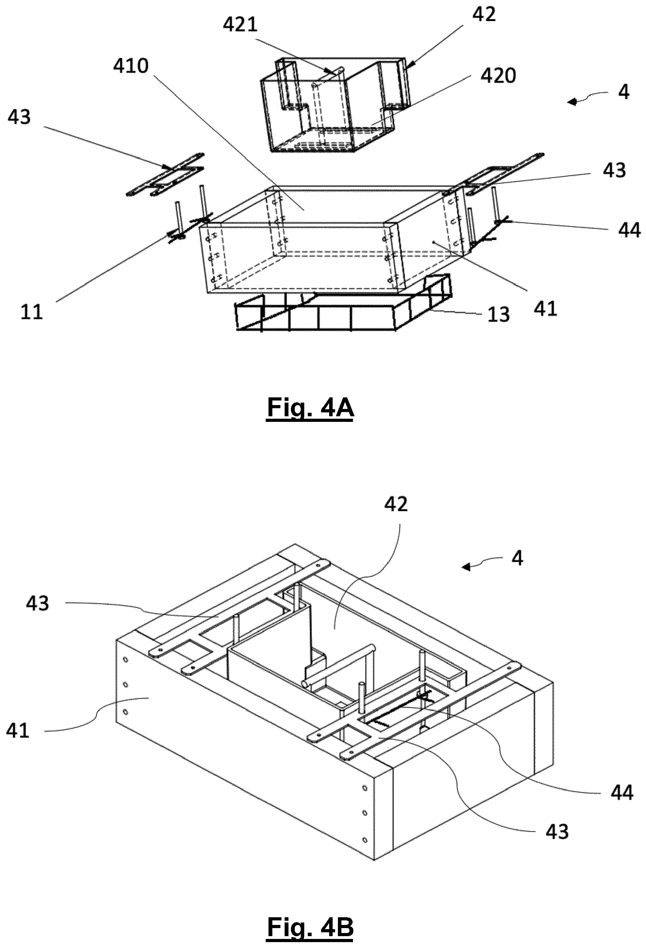

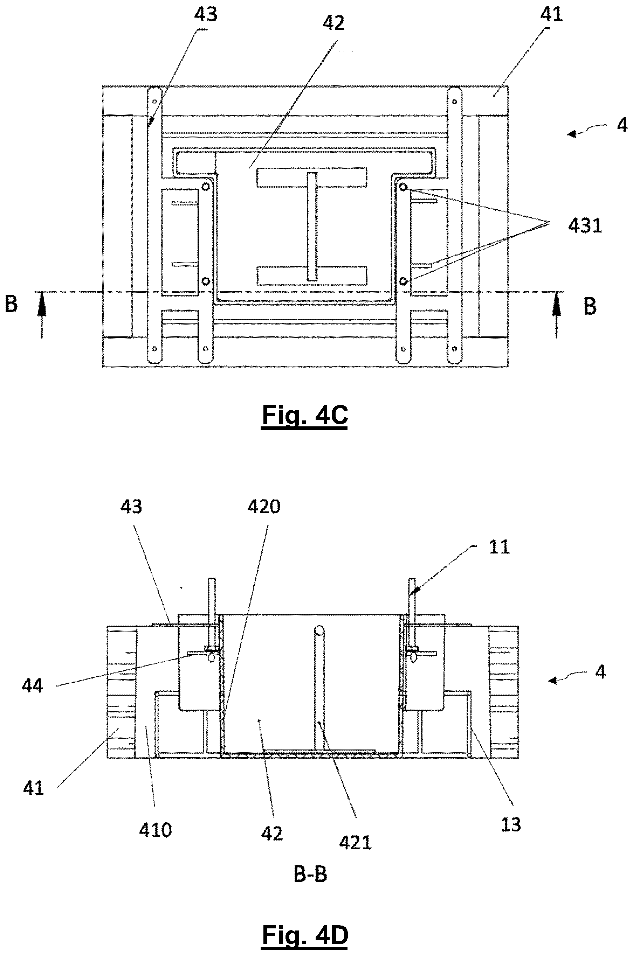

Par ailleurs, le support en béton 1 comprend une structure de renfort 13 (visible en figure 4A notamment) coulée dans le béton. Une telle structure, réalisé en un matériau métallique de préférence, permet de renforcer le support en béton 1.

Dans l'exemple illustré, le corps 10 présente une forme de parallélépipède rectangle ayant une longueur Lio de 48 cm, une largeur I₁₀ de 30,5 cm et une hauteur hio de 16,5 cm.

En outre, le corps 10 est réalisé en un béton composé de :
- 40% de sable fin, présentant de préférence une granulométrie comprise entre 50 et 100 µm,
- 50% de sable grossier, présentant de préférence une granulométrie comprise entre 200 µm et 1,5 mm, et
- 10% de ciment.

Une telle composition permet d'obtenir d'un support en béton, présentant les dimensions indiquées ci-dessus et comprenant une lumière 12 présentant les dimensions indiquées ci-dessous, présentant une masse d'approximativement 35 kg. Cela permet donc l'obtention d'un support en béton est donc plus léger que les solutions antérieures connues. Cela se traduit donc par une simplification de la manipulation et de l'installation du support en béton. Plus généralement, une telle composition permet d'obtenir un support en béton relativement léger et résistant. Toutefois, d'autres granulométries des sables fins et/ou grossier peuvent être envisagées.

Le corps 10 comprend donc deux faces principales 110, 111 opposées reliées par quatre côtés latéraux définissant la hauteur hio du corps. Les faces principales 110, 111 sont destinées à être orientées horizontalement et définissent des faces inférieure 110 et supérieure 111 respectivement. La face inférieure 110 est destinée à reposer sur le fond d'un trou T creusé dans le sol, et constitue donc la base du support en béton 1, tandis que la face supérieure 111 est destiné à être orientée en regard de l'ouverture du ce même trou, tel qu'illustré en figure 3.

Le support en béton 1 comprend quatre vis de fixation 11, de type M8 préférentiellement, chacune destinée à coopérer, après insertion au travers d'un trou ménagé dans l'enveloppe 20 du socle 2, avec un écrou de fixation (non représentés) disposé dans le volume intérieur vide 21 du socle 2.

Chaque vis de fixation 11 fait verticalement saillie depuis la face supérieure 111 du corps 10 sur une hauteur h11 prédéterminée en fonction du type de socle. Dans l'exemple illustré, la hauteur h11 est de 3 cm de sorte à assurer une fixation efficace du socle 2 de type S20 sur le support en béton 1, tel qu'illustré en figure 1C.

Par ailleurs, à l'intérieur du corps 10 est prévue la lumière 12, orientée verticalement, dont la partie principale 12A débouche de part et d'autre des faces inférieure et supérieure 110, 111 du corps 10. La lumière verticale 12 est configurée pour réceptionner et accueillir la portion périphérique 210 de l'enveloppe 20 du socle 2, tel que représenté par la flèche sur la figure 2. En d'autres termes, et conformément à la technique proposée, la lumière verticale 12 constitue donc une alvéole d'encastrement de la portion périphérique 210 de l'enveloppe 20 du socle 2.

Plus précisément, dans cet exemple, les parties auxiliaires 12B sont situées de part et d'autre de partie principale 12A et sont alignées à une extrémité commune de celle-ci. La lumière verticale 12 présente ainsi sensiblement la forme d'un « T ».

En outre, la partie principale 12A, présentant la forme d'un parallélépipède rectangle, présente une longueur L_{12A} de 25 cm, une largeur I_{12A} de 21,5 cm et une hauteur h_{12A} de 16,5 cm, c'est-à-dire égale à celle du corps 11. Chaque partie auxiliaire 12B, présentant également la forme d'un parallélépipède rectangle, présente une longueur L_{12B} de 5,5 cm, une largeur I_{12B} de 4 cm et une hauteur h_{12B} de 10,5 cm.

Par ailleurs, dans l'exemple illustré, la portion périphérique 210 de l'enveloppe 20 du socle 2 présente une hauteur égale à la hauteur h_{12B} des parties auxiliaires 12B. Cette hauteur correspond à la distance entre l'extrémité inférieur 200 du socle 2 et un épaulement 201 de l'enveloppe 20 de ce même socle 2, tel qu'illustré en figure 2.

Ainsi, lorsque la portion périphérique 210 du socle 2 est emboîté dans la lumière verticale 12 du support en béton 1, l'épaulement 201 du socle 2 est en contact et prend appui sur la face supérieure 111 du support en béton 1. Cela permet notamment d'améliorer la stabilité de l'ensemble.

### 5.2.2. Procédé d'installation d'un support en béton

Les **figures 2** à **3****,** d'ores et déjà abordées précédemment, sont utilisées ci-après pour décrit le procédé d'installation d'un socle et de son coffret par le biais d'un support en béton conforme à la technique proposée.

Une première étape consiste à creuser dans le sol S un trou T d'une profondeur comprise entre 15 et 20 cm et ce, sur une longueur de 50cm et une largeur de 35 cm. Cette première étape se poursuit en creusant une tranchée T_{R} de 15 cm de largeur et de 30 cm de profondeur dont une extrémité débouche dans le trou T, sensiblement en son centre.

Une deuxième étape consiste à disposer le support en béton 1 dans le trou T en disposant la surface inférieure 110 du support en béton 1 repose sur le fond du trou. Ainsi, l'extrémité de tranchée T_{R} est sensiblement en regard de la lumière 12 formant alvéole d'encastrement.

Dans une troisième étape, le socle 2 est couplé au support en béton 1.

Dans un premier temps, la portion périphérique 210 de l'enveloppe 20 du socle 2 est emboîtée dans l'alvéole d'encastrement formée par la lumière 12 du support en béton 1 jusqu'à ce que l'enveloppe 20 du socle 2 repose sur le fond des parties auxiliaires 12B borgnes de la lumière 12 du support en béton 1. Un tel encastrement est réalisé de manière à ce que les moyens de fixation 11 du support en béton 1 s'insèrent dans l'espace intérieur vide 21 du socle 2 par l'intermédiaire d'orifices 22 ménagés dans l'enveloppe 20 du socle 2, tel qu'illustré en figure 2.

Dans un second temps, des moyens de fixation complémentaires, typiquement des écrous (non représentés), sont rapportés sur les moyens de fixation 11 depuis l'espace intérieur vide 21 du socle 2 de manière sécuriser la solidarisation du socle 2 sur le support en béton 1.

Dans une quatrième étape, le coffret 3 est disposé sur le socle 2 et fixé à celui-ci. Cette quatrième étape se poursuit en disposant les conduites électriques publiques C_{PU} et privés C_{PR} dans une tranchée T_{R} et en les acheminant jusque dans le volume intérieur vide 21 du socle 2 et *in fine* jusque dans le coffret 3 par le biais de la partie principale 12A de la lumière 12 du support en béton 1. Cette quatrième étape se termine par le raccordement de l'installation électrique IE dans le coffret 3.

Au cours d'une cinquième et dernière étape, de la terre est utilisée pour combler le trou T et la tranchée T_{R}.

Un support en béton conforme à la technique proposée permet d'effectuer l'ensemble des étapes susmentionnées en approximativement 20 minutes. Il apparaît donc que la technique proposée permet d'assurer une installation du support en béton, du socle et du coffret associé, ainsi que le raccordement de l'installation électrique, au moins cinq fois plus rapide que les solutions antérieures connues. Cela se traduit donc notamment par une réduction de la pénibilité pour les intervenants effectuant une telle installation.

### 5.2.3. Moule de fabrication d'un support en béton

Les **figures 4A** à **4D** illustrent différentes vues d'un exemple de moule de fabrication d'un support en béton conforme à la technique proposée.

Un tel moule 4 comprend un cadre 41, également appelé châssis, destiné à former un espace intérieur clôt 410 délimitant des côtés latéraux du corps du support en béton. Pour ce faire, le cadre 41 comprend une pluralité de plaques orientées verticalement et solidarisées entre elles de sorte à définir l'espace intérieur clôt 410 en question. En d'autres termes, le cadre 41 est dépourvue d'élément délimitant les surfaces inférieure et supérieure du corps du support en béton de telle sorte que la lumière formée puisse le traverser de part en part.

Le moule 4 comprend en outre un noyau 42 amovible de formation de la lumière du support en béton. Un tel noyau 42, destiné à être disposé à l'intérieur de l'espace intérieur clôt 410 du cadre 41, comprend une coque extérieure 420 dont les formes et dimensions correspondent à celles de la lumière formant alvéole d'encastrement.

Par ailleurs, le moule 4 comprend des butées 43 de positionnement du noyau 42 dans l'espace intérieur clôt 410 du cadre 41.

Ces butées 43 permettent en outre d'assurer le positionnement des moyens de fixation dans l'espace intérieur clôt 410 du cadre 41. Pour ce faire, les butées 43 sont configurées pour être fixées sur et au-dessus du cadre 41 de sorte que les moyens de fixation puissent faire saillie verticalement du support en béton tout en étant partiellement logés dedans.

Le moule 4 comprend enfin, lorsque nécessaire, des structures de raccordement 44 des moyens de fixation du support en béton. Comme il apparaîtra plus clairement par la suite, de telles structures de raccordement 44 sont préalablement solidarisées à plusieurs moyens de fixation afin d'assurer le maintien de ceux-ci dans les butées 43 lors de la fabrication du support en béton.

Tel qu'illustré, le cadre 41 présente la forme d'un parallélépipède rectangle formé par quatre planches de bois, orientées verticalement, solidarisées entre elles par le biais de vis.

En outre, dans cet exemple, le noyau 42 est creux et présente une poignée 421 disposée à l'intérieur de la coque 420. Cette poignée 421 permet notamment de simplifier l'extraction du noyau 42 lorsque le béton coulé dans le moule 4 est sec.

Le moule 4 comprend deux butées 43, destinées à être positionnées de chaque côté du noyau 42, présentant respectivement deux orifices 431 pour le passage des vis de fixation 11.

### 5.2.4. Procédé de fabrication d'un support en béton

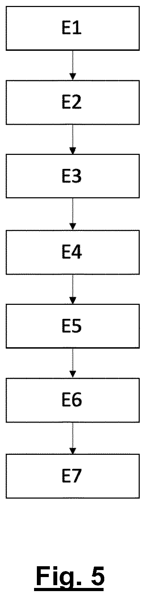

La **figure 5** est un organigramme représentant les étapes principales d'un procédé de fabrication du support en béton conforme à la technique proposée par l'utilisation d'un moule de fabrication tel que décrit précédemment. Ces étapes principales seront donc également décrites en relation avec les figures 4A à 4D représentant le moule de fabrication en question.

Le procédé de fabrication d'un support en béton conforme à la technique proposée comprend les étapes suivantes :
- positionnement E1 du cadre 41 sur une surface horizontale plane de sorte à délimiter la face inférieure du support en béton. Bien évidemment, la jonction du cadre 41 et de la surface horizontale est réalisée de manière étanche pour s'affranchir d'éventuelles fuites et coulures de béton liquide.
- positionnement E2 de la structure de renfort 13 dans l'espace intérieur clôt 410 du cadre 41.
- fixation E3 des butées 43 sur le cadre 41 selon un agencement prédéterminé. Dans l'exemple illustré, les butées 43 sont positionnées de manière à centrer le noyau 42 dans l'espace intérieur clôt 410 du cadre 41. Par exemple, le cadre 41 peut présenter des repères de fixation (non représentés) permettant d'identifier aisément les zones de fixation des butées 43 sur le cadre 41 pour obtenir un tel centrage.
- positionnement E4, par l'intermédiaire des butées 43, des moyens de fixation 11 reliés à l'intérieur de l'espace intérieur clôt 410 du cadre 41. Au cours d'une étape préalable, les moyens de fixation 11 destinés à coopérer avec une même butée 43 ont été reliés, par soudage par exemple, à une même structure de raccordement 44 de sorte à assurer le maintien en position des moyens de fixation après insertion à l'intérieur de l'espace intérieur clôt 410 du cadre 41.
- insertion E5 du noyau 42 dans l'espace intérieur clôt 410 du cadre 41 et mise en butée du noyau 42 contre les butées 43 de sorte à assurer un positionnement correct du noyau 42 dans l'espace intérieur clôt 410 du cadre 41.
- coulage E6 d'un béton présentant une composition prédéterminée entre le cadre 41 et le noyau 42, c'est-à-dire dans l'espace intérieur clôt restant.
- après séchage du béton, extraction E7 du support en béton 1 formé. Pour ce faire, il convient d'enlever le noyau 42, par le biais de la poignée 421, les butées 43 et le cadre 41. Bien évidemment, les moyens de fixation 11, qui étaient partiellement logés dans l'espace intérieur clôt 410 du cadre 41, sont désormais solidaires du corps du support en béton.

Ainsi, il apparaît qu'un support en béton conforme à la technique proposée est relativement simple de fabrication.

### 5.3. Autres aspects et variantes

Dans l'exemple illustré, la lumière, formant alvéole d'encastrement d'une portion périphérique de l'enveloppe du socle, coopère avec un socle de type S20 simple, c'est-à-dire un socle de type S20 destiné à supporter un unique coffret de type S20 également.

Néanmoins, la technique proposée n'est nullement limitée à un tel type de socle et peut, sous réserve d'adaptation des formes et/ou dimensions de certains aspects du support en béton, s'appliquer de la même façon à d'autres types de socles.

En ce sens par exemple, il peut être envisagé d'adapter les formes et dimensions du corps et de la lumière pour que celle-ci puisse former alvéole d'encastrement d'une portion périphérique de l'enveloppe d'un socle de type S20 double. De tels socles doubles présentent une enveloppe commune dans laquelle est disposée une cloison de séparation de son espace intérieur vide. Chaque sous-espace séparé est destiné à coopérer avec un coffret.

Il peut également être envisagé d'adapter les formes et dimensions du corps et de la lumière pour que celle-ci puisse former alvéole d'encastrement d'une portion périphérique de l'enveloppe d'un socle de type S22 simple ou double par exemple.

D'autres modes de réalisation de la technique proposée sont décrits ci-après mais non illustrés.

Dans un autre mode de réalisation, les moyens de fixation sont formés par des ergots d'encliquetage coopérant avec les orifices ménagés dans l'enveloppe du socle.

Dans un autre mode de réalisation, le support en béton est dépourvu de structure de renfort de sorte à réduire les coûts de fabrication et à simplifier la fabrication du support.

Dans un autre mode de réalisation, la lumière formant alvéole d'encastrement est dépourvue de partie borgne permettant la mise à niveau avec le socle. Dans ce mode de réalisation alternatif, l'intégralité de la lumière traverse de part en part le corps. Cela permet de simplifier la fabrication du support en béton, notamment en simplifiant la structure du noyau du moule de fabrication. Dans ce mode de réalisation alternatif, la mise à niveau avec le socle se fait par l'appui de l'épaulement de l'enveloppe du socle sur la face supérieure du support en béton.

Dans un autre mode de réalisation, l'alvéole d'encastrement est considérée comme suffisante pour assurer, à elle seules, la fixation et le maintien en position du socle sur le support est béton. Ainsi, il est possible de s'affranchir de la mise en oeuvre des moyens de fixation, à savoir les couples vis et écrou. De manière alternative, les couples vis et écrou peuvent être conservés et assurer uniquement une fonction de verrouillage de l'assemblage du socle sur le support en béton.

Dans un autre mode de réalisation, un même support en béton comprend plusieurs lumières, chacune destinée à former alvéole d'encastrement d'une portion périphérique de l'enveloppe d'un socle. Un tel support en béton permet donc de supporter au moins deux socles distincts.

Dans un autre mode de réalisation, le logement d'emboîtement présente un fond, plein, de faible épaisseur. Le passage des conduites électriques est réalisé par un ou plusieurs orifices ménagés dans le fond du logement, dans par l'opérateur, à une position déterminée par celui-ci. Une telle position peut varier selon le type de socle par exemple. Ainsi, on minimise notamment l'infiltration de l'humidité du sol dans le socle électrique et les risques associés.

Il apparaît donc clairement que la technique proposée n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de réalisation décrits précédemment, pouvant être pris séparément ou en association.

Selon différents aspects, la technique proposée présente donc tout ou partie des avantages suivants, en fonction des modes de réalisation ou variantes retenus :
- assurer une opération rapide de pose du support en béton et de l'installation du socle et coffret associés ;
- permettre une fixation simple et efficace du socle sur le support en béton ;
- assurer une installation pérenne du socle sur le support en béton ;
- réduire la pénibilité de l'opération de pose du support en béton et de l'installation du socle et coffret associés ;
- garantir la protection des conduites et canalisations ;
- proposer un support en béton léger, et donc plus aisément manipulable ;
- proposer un support en béton résistant ;
- limiter les coûts de fabrication du support en béton ;
- limiter l'encombrement du support en béton ;
- etc.

## Revendications

1. Support en béton (1) pour socle (2) de coffret (3) hors sol de raccordement à un réseau d'énergie ou de communication, comprenant une semelle (10) en béton, **caractérisé en ce que** ladite semelle (10) présente un logement (12) formant alvéole d'encastrement d'une portion périphérique (210) d'une enveloppe (20) dudit socle (2), ledit logement (12) comprend une partie principale (12A), traversant de part en part ladite semelle (10) de sorte à permettre l'acheminement d'au moins une conduite électrique, et au moins une partie auxiliaire (12B) borgne.

2. Support en béton (1) selon la revendication 1, **caractérisé en ce qu'**il comprend en outre des moyens (11) de fixation ou de verrouillage destinés à coopérer avec des moyens de fixation ou de verrouillage complémentaires portés par ladite enveloppe (20) dudit socle (2).

3. Support en béton (1) selon l'une quelconque des revendications 1 et 2, **caractérisé en ce qu'**il comprend en outre une structure de renfort (13) disposée à l'intérieur de la ladite semelle (10).

4. Support en béton (1) selon l'une quelconque des revendications 1 à 3, **caractérisé en ce que** ladite semelle (10) est réalisée en un béton composé de :
- 40% de sable fin,
- 50% de sable grossier, et
- 10% de ciment.

5. Support en béton (1) selon la revendication 1, **caractérisé en ce qu'**il comprend deux parties auxiliaires (12B) et **en ce que** lesdites parties auxiliaires (12B) sont situées de part et d'autre de la partie principale (12A) et sont alignées à une extrémité commune de celle-ci.

6. Support en béton (1) selon l'une quelconque des revendications 1 à 5, **caractérisé en ce qu'**il est destiné à supporter un socle de type S20 conforme à la norme HN 62-S-20.

7. Support en béton (1) selon les revendications 5 et 6, **caractérisé en ce que** ladite semelle (10) est de forme parallélépipède rectangle et présente une longueur (L₁₀) de 48 cm, une largeur (I₁₀) de 30,5 cm et une hauteur (hio) de 16,5 cm,
et **en ce que** ladite partie principale (12A) est de forme parallélépipède rectangle et présente une longueur (L_{12A}) de 25 cm, une largeur (I_{12A}) de 21,5 cm et une hauteur (h_{12A}) de 16,5 cm, et **en ce que** chaque partie auxiliaire (12B) est de forme parallélépipède rectangle et présente une longueur (L_{12B}) de 5,5 cm, une largeur (I_{12B}) de 4 cm et une hauteur (h_{12B}) de 10,5 cm.

8. Moule (4) pour la fabrication d'un support en béton (1) selon l'une quelconque des revendications 1 à 7, **caractérisé en ce qu'**il comprend :
- un cadre (41) définissant un espace intérieur clôt (410) délimitant des côtés latéraux de ladite semelle (10),
- un noyau (42), destiné être disposé à l'intérieur dudit espace intérieur clôt (410), de formation dudit logement (12), et
- des butées (43) de positionnement dudit noyau (42) à l'intérieur dudit espace intérieur clôt (410).

9. Procédé de fabrication d'un support en béton (1) selon l'une quelconque des revendications 1 à 7 par la mise en oeuvre d'un moule (4) selon la revendication 8, **caractérisé en ce qu'**il comprend les étapes suivantes :
- positionnement dudit cadre (41) sur une surface horizontale plane,
- fixation desdites butées (43) sur ledit cadre (41) selon un agencement prédéterminé,
- insertion dudit noyau (42) à l'intérieur dudit espace intérieur clôt (410) et mise en butée contre lesdites butées (43),
- coulage d'un béton présentant une composition prédéterminée entre ledit cadre (41) et ledit noyau (42), et
- après séchage dudit béton, extraction du support en béton (1).
